# EUROPEAN PATENT SPECIFICATION

(11) **EP 3 406 120 B1**
(45) Date of publication and mention of the grant of the patent: **11.12.2019**
(21) Application number: 17172820.7
(22) Date of filing: 24.05.2017
(51) Int. Cl.: A01B 69/00

(54) **METHOD FOR CONTROLLING OPERATION OF A USER CONTROL TERMINAL OF AN AGRICULTURAL MACHINE AND AGRICULTURAL MACHINE**
VERFAHREN ZUR STEUERUNG DES BETRIEBS EINES BENUTZERSTEUERUNGSENDGERÄTS EINER LANDWIRTSCHAFTLICHEN MASCHINE SOWIE LANDWIRTSCHAFTLICHE MASCHINE
PROCÉDÉ POUR COMMANDER LE FONCTIONNEMENT D'UN TERMINAL DE COMMANDE UTILISATEUR D'UNE MACHINE AGRICOLE ET MACHINE AGRICOLE

(43) Date of publication of application: 28.11.2018
(73) Proprietor: Kverneland Group Mechatronics BV, 2153 LR Nieuw-Vennep (NL)
(72) Inventor: Jacobs, Jeroen, 2402 EL Alphen aan den Rijn (NL); Hagemann, Sebastian, 34439 Willebadessen (DE)
(74) Representative: Bittner, Thomas L.

(56) References cited:
- EP-A1- 1 380 202
- EP-A2- 1 714 823

## Description

The present disclosure refers to a method for controlling operation of a user control terminal of an agricultural machine and an agricultural machine.

### Background

For agricultural machines a user control terminal may be provided in a tractor which provides a user interface for receiving user input, for example, for setting limits of operation parameters to be applied for controlling operation of one or more functional elements of an implement trailed by or carried on the tractor. For example, the so called IsoMatch Tellus is provided as a user interface. The user is provided with a user menu on a display of the user control terminal. The user may provide input by engaging with a touch sensitive screen of the user control terminal. In addition or as an alternative, a joystick or a control knob may be provided for selecting menu items displayed on the display of the user control terminal.

Document EP 1 380 202 A1 discloses an automatic control system for a harvester. A shutter may be provided which can be switched between different positions, the positions assigned to different operation control with regard to the harvester.

### Summary

It is an object of the present disclosure to provide a method for controlling operation of a user control terminal of an agricultural machine and an agricultural machine for improving operability of the agricultural machine.

A method for controlling operation of a user control terminal of an agricultural machine and an agricultural machine according to the independent claims 1 and 15, respectively, are provided. Alternative embodiments are disclosed in dependent claims.

According to an aspect, a method for controlling operation of a user control terminal of an agricultural machine is provided. The method comprises providing an agricultural machine having a tractor and an implement trailed by or carried on the tractor and a user controlled terminal on the tractor, the user controlled terminal configured for receiving user input through a control knob. The control knob is operated in a first knob mode of operation, comprising: receiving a first function control user input through the control knob; in response to the receiving, generating first function control signals for a functional element of the implement in a control unit functionally connected to the functional element; and operating the functional element according to the first function control signals; receiving a second function control user input through the control knob; in response to the receiving, generating second function control signals for the functional element of the implement in the control unit; and changing operation of the functional element for operating the functional element according to the second function control signals. A request user input for changing knob mode of operation for the control knob is received. In response to the receiving, the control knob is operated in a second knob mode operation, the user controlled terminal being prevented from receiving function control user input through the control knob in the second knob mode operation. The operating of the control knob in the second knob mode of operation comprises: displaying a user menu on a display of the user control terminal; receiving a menu control user input through the control knob; and controlling selection of a menu item in the user menu displayed according to the menu control user input.

According to another aspect, an agricultural machine is provided, comprising a tractor, an implement trailed by or carried on the tractor, a user controlled terminal on the tractor and a control knob provided on the user control terminal for receiving user input through the control knob. The user control terminal having the control knob is configured to operate the control knob in a first knob mode of operation, comprising: receiving a first function control user input through the control knob; in response to the receiving, generating first function control signals for a functional element of the implement in a control unit functionally connected to the functional element; operating the functional element according to the first function control signals; receiving a second function control user input through the control knob; in response to the receiving, generating second function control signals for the functional element of the implement in the control unit; and changing operation of the functional element for operating the functional element according to the second function control signals. Further, the user controlled terminal is configured a request user input for changing knob mode of operation for the control knob and, in response to the receiving, operate the control knob in a second knob mode of operation, the user controlled terminal being prevented from receiving function control user input through the control knob in the second knob mode of operation. Operating the control knob in the second knob mode operation comprises: displaying a user menu on a display of the user control terminal; receiving a menu control user input through the control knob; and controlling selection of a menu item in the user menu displayed according to the menu control user input.

The technologies provided allow for switching the control knob function between direct and instant operation control of the functional element of the implement and menu item selection not instantly changing operation of the functional element. In an alternative embodiment, in the second knob mode of operation, operation parameter settings may be received through the control knob, such settings being applied to the functional element at a later stage, therefore not providing for direct or real-time control.

The technologies disclosed may provide for implementing, by the control knob in the first knob mode of operation, a control element for the operation of the functional element of the implement. By engaging with the control knob in the first knob mode of operation the user may be allowed to instantly and actually control the functional operation state of the functional element of the implement. In direct response to the user engaging with the control knob, the functional element is operated according to present (changing) control signals generated instantly or in real-time in response to the different function control user inputs.

A changing operation may comprise changing an operation position of the functional element from the first operation position in the first knob mode operation to a second operation position in the second knob mode of operation. For example, the first and second operation position may be a lifted and a lowered operation position. As an alternative or in addition, the first and second operation positions may refer to a proximal or distal position of the functional element with regard to another element of the implement, for example, a support frame.

The changing of the operation may comprise changing an operation position of the functional element from a first operation position in the first knob mode of operation to a second operation position in the second knob mode of operation.

The changing of the operation position may comprise changing the operation position of the functional element from a first rotational position in the first mode of operation to a second rotational position in the second mode of operation. For example, a conveyer or a cutting element of a mower may be moved in response to the user input through the control knob in the first knob mode of operation from a first to a second rotational position.

The changing of the operation position may comprise changing a steering position of a functional steering element from a first steering position in the first knob mode of operation to a second steering position in the second knob mode of operation. Thereby, the user is provided with the option for steering the functional steering element of the implement by engaging with the control knob. Rotating the control knob will turn the functional steering element into different steering positions. In this embodiment, the control knob may implement a steering wheel rotation of which applies rotation of the functional steering element in real-time or an instant manner.

The changing of the operation may comprise changing an operation position of the functional implement from a first operation speed in the first knob mode operation to a second operation speed in the second knob mode of operation. By rotating the control knob the speed of a rotational movement of the functional element is changed, for example, a speed of rotation (rotational speed). For example, the speed of rotation of the functional element in operation may be increased or lowered in response to the user engaging with the control knob, thereby, rotating the control knob, in the first knob mode of operation. In an alternative, the speed of rotation of a rake element of a rake machine may be changed by rotating the control knob, thereby, receiving functional control user input through the control knob on the user control terminal in the tractor.

With regard to the method, the providing of the user control terminal may comprise the control knob with a wheel rotatable received on the user control terminal, and the receiving of the user input may comprise determining different rotational positions of the wheel for receiving the first and second control user input.

With regard to the method, the providing of the user control terminal may comprise providing the control knob with a graphical knob element on the display of the user control terminal, and the receiving of the user input comprises detecting display user input for receiving the first and second function control user input, the display user input engaging with the graphical knob element. Changing the graphical element may refer to rotating the graphical element displayed on the display of the user control terminal in response to the user input. The user input, for example, may be received by the user touching a touch sensitive display or engaging with a joystick and / or a mouse input for rotating the graphical knob element on the display.

The generating may comprise the first function control signals for the functional element indicating a first value of an operation parameter and the second function control signals for the functional element indicating a second value of an operation parameter, wherein a value difference between the first and second value of the operation parameter is proportional to a position difference between a first rotational position and a second rotational position of the control knob assigned to the first and the second function control user input, respectively. The operation parameter, for example, may refer to speed, height and / or distance. The position difference between the first and the second rotational position may be a difference in the degree of rotation.

The generating may comprise generating at least one of the first and second function control signals in a central in a control unit connected to the user control terminal, and transmitting at least one of the first and second function control signals from the central control unit to a local control unit on the implement through a data bus, the local control unit connected to the functional and configured to control operation of the functional element.

The preventing may comprise preventing the user control terminal comprises at least one of preventing generation of the first and second function control signals in the control unit, and preventing transmission of the first and second function control signals from the central control unit to the local control unit. The preventing may comprise interrupting the data bus connection to the local control unit assigned to the functional element. The preventing may comprise setting an operation flag in an operating system in the user control terminal, the operation flag indicating the second mode of operation not allowing or preventing receiving function control user input through the control knob.

The operating of the functional implement may comprise, in response to the receiving the first and second function control user input, real-time operating the functional element according to the first and second function control signals. A real-time switching may apply for switching of the operation of the functional element from the first to the second functional control signals.

The operating of the functional element may comprise operating a functional implement element from the following group: rake element, conveyor element, pick-up element, cutting element, wrapping element, lifting element, steering element, spraying element, seeding element, and chamber element of a baler. The functional element may be provided on an implement selected from the following group: mower, baler, sprayer, rake, seeder, and loader wagon.

The method, in at least one of the first knob mode of operation and the second knob mode of operation, may comprise limiting a rotation of the control knob to a predefined degree of rotation. For example, in the first mode of operation, the limiting of the control knob rotation will limit operation of the functional element. For example, an extent of a relocation of the functional element, e.g. a distance of relocation, may be limited. Thereby, damage to the functional element may be prevented. Such damage may be caused if the functional element, in response to the user input through the control knob, would be moved to a position outside operation limits of the functional element. The operation limits of the functional element may be assigned to the limits of predefined degree of rotation. For example, a maximum distance of movement of the functional element may be assigned to the predefined degree of rotation. The limiting of the rotation of the control knob may be applied to the graphical knob element, for example, by providing proper software control. With regard to the "hardware" control knob, for example, the rotatable wheel, some mechanical and / or electro-mechanic rotation control may be provided which is limiting the rotation of the wheel to the predefined degree of rotation which may be adjustable by the user.

With regard to the agricultural machine, the alternative embodiments disclosed regarding the method for controlling operation of the user controlled terminal above may apply mutatis mutandis.

### Description of embodiments

Following, further embodiments are described with reference to the figures. In the figures, show
- Fig. 1: a schematic representation of a control system of an agricultural machine or system provided with a tractor and an implement trailed by or carried on the tractor;
- Fig. 2: a schematic representation of a user control terminal having a panel of a control knob provided with a wheel rotatable received on the user control terminal;
- Fig. 3: a schematic representation of the panel from Fig. 2, the control knob being operated in a second knob mode of operation;
- Fig. 4: a schematic representation of a panel of a user controlled terminal having a control knob provided with a graphical knob element on a display of the user control terminal, the control knob being operated in a first knob mode of operation; and
- Fig. 5: a schematic representation of the panel from Fig. 4, the control knob being operated in a second knob mode of operation.

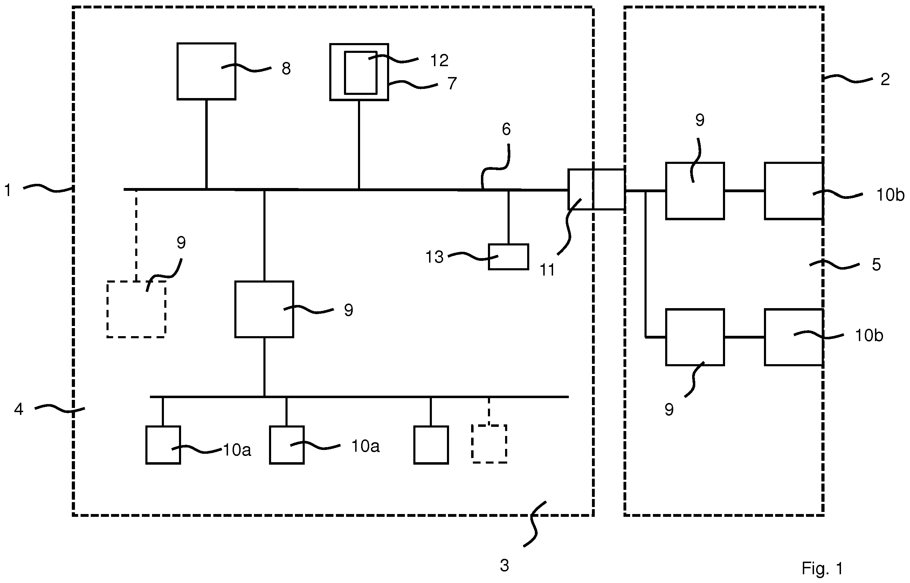

Fig. 1 shows a schematic representation of an agricultural machine or system having a tractor 1 and an implement 2 trailed by or carried on the tractor 1.

An agricultural machine control network 3 provides for an electronic control system of the agricultural machine or system. The agricultural machine control network 3 comprises a tractor control network 4 and an implement control network 5. The agricultural machine control network 3 is having a data bus 6 to which, according to the embodiment shown, a user control terminal 7, a task controller 8, and a plurality of electronic control units 9 are connected. Each of the electronic control units 9 is assigned to a functional element 10a, 10b provided in the tractor 1 and the implement 2, respectively. In an alternative embodiment, the electronic control units 9 connected to the user control terminal 7 through the data bus may only be applied to the functional element(s) 10b of the implement 2, but not to the functional element(s) 10a of the tractor.

With regard to the implement 2, the functional elements 10b may also be to as working or functional unit. Through the data bus 6 electronic data may be transmitted between the components, units, modules or elements connected to the data bus 6. The electronic control system of the agricultural machine control network 3 may implement the ISO 11783 standard, preferably the ISO 11783-11 standard.

The data bus 6 is provided with a plug connector 11 connecting the tractor control network 4 and the implement control network 5.

The user or operator control terminal 7 is provided with a terminal display 12 and provides for user control and user display. Further, the user control terminal 7 is provided with a processor unit comprising a processor and a memory element connected to the processor. Multiple software applications implemented on the user terminal may be running simultaneously.

Through the user control terminal 7 user input may be received for controlling the functional elements 10a, 10b of the agricultural machine or system. Also, through the terminal display 12 operation information may be displayed to the user.

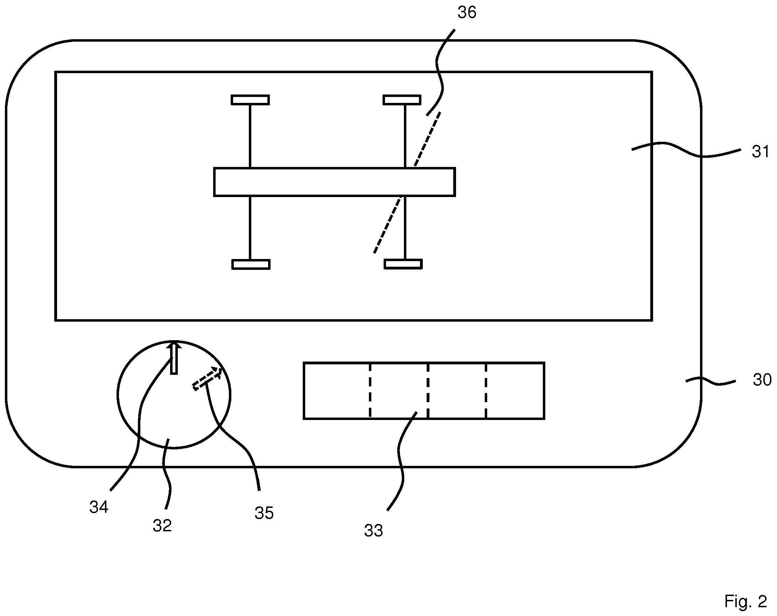

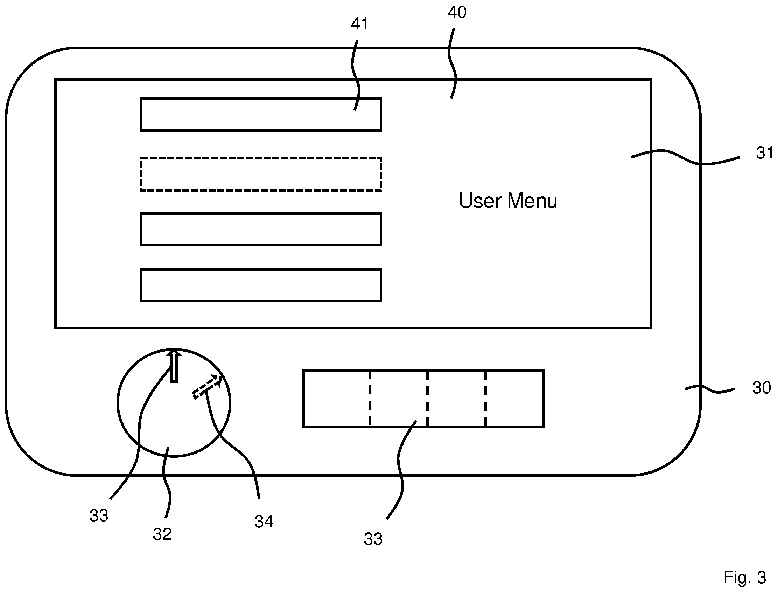

Referring to Fig. 2 and 3, a schematic representation of a panel 30 of the user control terminal 7 is shown. The user control terminal 7 is having a display field 31 provided on the display 12 and a control knob 32. Further, input elements 33 are provided on the panel 30 of the user control terminal 7 which, for example, may be provided by a plurality of push buttons.

The control knob 32 is to be operated in a first and a second knob mode of operation, shown in Fig. 2 and 3, respectively. In the first knob mode of operation, according to Fig. 2, a first and a second function control user input are received in the user control terminal 30 through the control knob 32, wherein the control knob 32 is in different rotational positions 34, 35 depicted in Fig. 2. In response to the receiving of the first and second function control user input, first and second function control signals are generated for the functional element 10b of the implement 2, and the functional element 10b is operated according to the first function control signals and, after receiving the second function control user input through the control knob 32, according to the second function control signals. For example, a rotation speed of the functional element 10b is changed in response to receiving the second function control user input, wherein the rotation speed may be lowered or increased. In an alternative embodiment, the control knob 32 in the first knob mode of operation may implement direct steering of a steering element of the implement 2, such as the functional element 10b. The steering element is controlled by rotating the control knob 32 of the user control terminal 7 on the tractor 1. According to Fig. 2, a present steering position may be indicated by a graphical representation 36 on the display field 31.

In response to a request user input for changing knob mode of operation for the control knob 32, the operation of the control knob 32 may switch to a second knob mode of operation shown in Fig. 3. Such request user input may be received through the control knob 32 and / or, for example, the further input elements 33. In the second knob mode of operation, the user control terminal 7 is prevented from receiving function control user input for the functional element(s) 10b of the implement 2 through the control knob 32. Therefore, direct or real-time control of the functional element(s) 10b through the control knob 32 is not allowed (blocked) in the second knob mode of operation. In a similar way, if the user control terminal 7 is connected to the functional elements 10a of the tractor 1, the user control terminal 7 may be prevented from receiving function control user input for the functional element(s) 10a of the tractor 1 through the control knob 32 in the second knob mode of operation.

In the second knob mode of operation, the control knob 32 provides for different functionality, namely handling or guiding through a user menu 40 (see Fig. 3) displayed on the display field 31 of the display 12 of the user control terminal 7. Menu control user input may be received through the control knob 32 for controlling selection of a menu item 41 of the user menu 40 displayed. In the second knob mode of operation, the control knob 32 allows the user to handle or manipulate the user menu displayed.

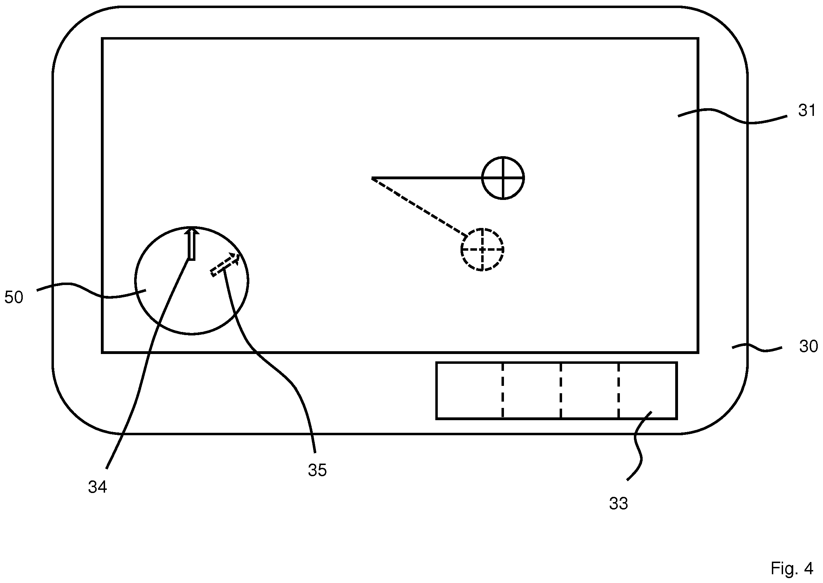

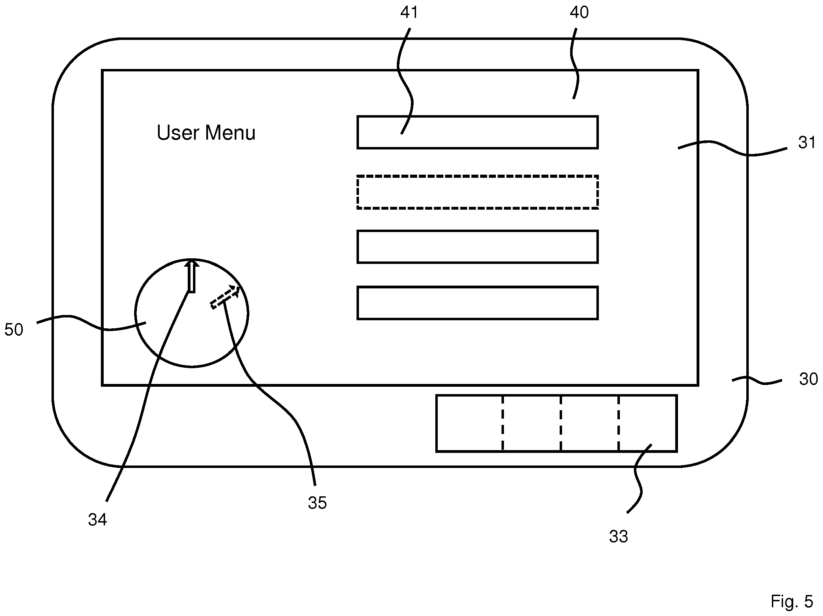

Referring to Fig. 4 and 5, alternative embodiments are depicted in which the control knob 32 is implemented or provided by a graphical knob element 50 on the display field 31 of the user control terminal 7. The operation described above with regard to the rotatable wheel may apply to the graphical knob element 50 mutatis mutandis. The graphical knob element 50 may be rotated into the different rotational positions 34, 35 by the user for providing function control user input in the first knob mode of operation as described above. Changing of the graphical knob element 50, for example by rotating the graphical knob element 50 on the display field 31 may be caused the user by touching the display field 31 which may be provided as a touch sensitive display. As an alternative, the further input elements 33 may allow for user input for changing the graphical knob element 50 for function control user input. Similarly, according to Fig. 5 the user may engage with the graphical knob element 50 for providing menu control user input in the second knob mode of operation applied to the control knob 32 represented by the graphical knob element 50.

## Claims

1. A method for controlling operation of a user control terminal of an agricultural machine, comprising
- providing an agricultural machine having a tractor (1) and an implement (2) trailed by or carried on the tractor (1);
- providing a user control terminal (7) on the tractor (1), the user control terminal (7) configured for receiving user input through a control knob (32);
- operating the control knob (32) in a first knob mode of operation, comprising
- receiving a first function control user input through the control knob (32);
- in response to the receiving, generating first function control signals for a functional element (10a; 10b) of the implement (2) in a control unit (9) functionally connected to the functional element (10a; 10b);
- operating the functional element (10a; 10b) according to the first function control signals;
- receiving a second function control user input through the control knob (32);
- in response to the receiving, generating second function control signals for the functional element (10a; 10b) of the implement (2) in the control unit (9); and
- changing operation of the functional element (10a; 10b) for operating the functional element (10a; 10b) according to the second function control signals;
**characterized by**
- receiving a request user input for changing knob mode of operation for the control knob (32); and
- in response to the receiving, operating the control knob (32) in a second knob mode of operation, the user control terminal (7) prevented from receiving function control user input through the control knob (32) in the second knob mode of operation, comprising
- displaying a user menu (40) on a display (12) of the user control terminal (7);
- receiving a menu control user input through the control knob (32); and
- controlling selection of a menu item in the user menu (40) displayed according to the menu control user input.

2. The method according to claim 1, wherein the changing operation comprises changing an operation position of the functional element (10a; 10b) from a first operation position in the first knob mode of operation to a second operation position in the second knob mode of operation.

3. The method according to claim 2, wherein the changing the operation position comprises changing the operation position of the functional element (10a; 10b) from a first rotational position in the first mode of operation to a second rotational position in the second mode of operation.

4. The method according to at least one of the preceding claims, wherein the changing the operation position comprises changing a steering position of a functional steering element from a first steering position in the first knob mode of operation to a second steering position in the second knob mode of operation.

5. The method according to at least one of the preceding claims, wherein the changing operation comprises changing an operation position of the functional implement (10a; 10b) from a first operation speed in the first knob mode operation to a second operation speed in the second knob mode of operation.

6. The method according to at least one of the preceding claims, wherein
- the providing of the user control terminal (7) comprises providing the control knob (32) with a wheel rotatable received on the user control terminal (7); and
- the receiving of the user input comprises determining different rotational positions of the wheel for receiving the first and second function control user input.

7. The method according to at least one of the preceding claims, wherein
- the providing of the user control terminal (7) comprises providing the control knob (32) with a graphical knob element on the display (12) of the user control terminal (7); and
- the receiving of the user input comprises detecting display user input for receiving the first and second function control user input, the display user input engaging with the graphical knob element.

8. The method according to at least one of the preceding claims, wherein the generating comprises
- the first function control signals for the functional element (10a; 10b) indicating a first value of an operation parameter; and
- the second function control signals for the functional element (10a; 10b) indicating a second value of an operation parameter;
wherein a value difference between the first and second value of the operation parameter is proportional to a position difference between a first rotational position and a second rotational position of the control knob (32) assigned to the first and the second function control user input, respectively.

9. The method according to at least one of the preceding claims, wherein the generating comprises
- generating at least one of the first and second function control signals in a central control unit connected to the user control terminal (7); and
- transmitting at least one of the first and second function control signals from the central control unit to a local control unit on the implement (2) through a data bus, the local control unit connected to the functional and configured to control operation of the functional element (10a; 10b).

10. The method according to at least one of the preceding claims, wherein the preventing the user control terminal (7) comprises at least one of
- preventing generation of the first and second function control signals in the control unit; and
- preventing transmission of the first and second function control signals from the central control unit to the local control unit.

11. The method according to at least one of the preceding claims, wherein the operating of the functional implement (10a; 10b) comprises, in response to the receiving the first and second function control user input, real-time operating the functional element (10a; 10b) according to the first and second function control signals.

12. The method according to at least one of the preceding claims, wherein the operating of the functional element (10a; 10b) comprises operating a functional implement element from the following group: rake element, conveyor element, pick-up element, cutting element, wrapping element, lifting element, steering element, spraying element, seeding element, and chamber element of a baler.

13. The method according to at least one of the preceding claims, wherein the providing the user control terminal (7) comprises providing a central user control terminal on the tractor (1), the central user control terminal configured for receiving user input for setting implement modes of operation for the implement (2), and tractor modes of operation for the tractor (1).

14. The method according to at least one of the preceding claims, further comprising, in at least one of the first knob mode of operation and the second knob mode of operation, limiting a rotation of the control knob (32) to a predefined degree of rotation.

15. An agricultural machine, comprising
- a tractor (1);
- an implement (2) trailed by or carried on the tractor (1);
- a user control terminal (7) on the tractor (1); and
- a control knob (32) provided on the user control terminal (7) for receiving user input through the control knob (32);
wherein the user control terminal (7) having the control knob (32) is configured to
- operate the control knob (32) in a first knob mode of operation, comprising
- receiving a first function control user input through the control knob (32);
- in response to the receiving, generating first function control signals for a functional element (10a; 10b) of the implement (2) in a control unit functionally connected to the functional element (10a; 10b);
- operating the functional element (10a; 10b) according to the first function control signals;
- receiving a second function control user input through the control knob (32);
- in response to the receiving, generating second function control signals for the functional element (10a; 10b) of the implement (2) in the control unit (9); and
- changing operation of the functional element (10a; 10b) for operating the functional element (10a; 10b) according to the second function control signals;
**characterized in that** the user control terminal (7) is further configured to receive a request user input for changing knob mode of operation for the control knob (32); and
- in response to the receiving, operate the control knob (32) in a second knob mode of operation, the user control terminal (7) prevented from receiving function control user input through the control knob (32) in the second knob mode of operation, comprising
- displaying a user menu (40) on a display (12) of the user control terminal (7);
- receiving a menu control user input through the control knob (32); and
- controlling selection of a menu item in the user menu (40) displayed according to the menu control user input.

## Patentansprüche

1. Verfahren zum Steuern des Betriebs eines Benutzerterminals einer landwirtschaftlichen Maschine, umfassend
- das Bereitstellen einer landwirtschaftlichen Maschine aufweisend eine Zugmaschine (1) und ein Arbeitsgerät (2), welches von der Zugmaschine (1) gezogen oder getragen wird;
- das Bereitstellen eines Benutzersteuerterminals (7) an der Zugmaschine (1), wobei das Benutzersteuerterminal (7) dafür eingerichtet ist, durch einen Steuerknopf (32) Benutzereingaben zu empfangen;
- das Betreiben des Steuerknopfes (32) in einem ersten Knopfbetriebsmodus, umfassend
- das Empfangen einer ersten Funktionssteuerungsbenutzereingabe durch den Steuerknopf (32);
- als Reaktion auf das Empfangen, das Erzeugen erster Funktionssteuersignale für ein Funktionselement (10a; 10b) des Arbeitsgeräts (2) in einer Steuereinheit (9), welche funktional mit dem Funktionselement (10a; 10b) verbunden ist;
- das Betreiben des Funktionselements (10a; 10b) gemäß den ersten Funktionssteuersignalen;
- das Empfangen einer zweiten Funktionssteuerungsbenutzereingabe durch den Steuerknopf (32);
- als Reaktion auf das Empfangen, das Erzeugen zweiter Funktionssteuersignale für das Funktionselement (10a; 10b) des Arbeitsgeräts (2) in der Steuereinheit (9); und
- das Ändern des Betriebs des Funktionselements (10a; 10b) zum Betreiben des Funktionselements (10a; 10b) gemäß den zweiten Funktionssteuersignalen;
**gekennzeichnet durch**
- das Empfangen einer Anforderungsbenutzereingabe zum Ändern des Knopfbetriebsmodus für den Steuerknopf (32); und
- als Reaktion auf das Empfangen, das Betreiben des Steuerknopfs (32) in einem zweiten Knopfbetriebsmodus, wobei das Benutzersteuerterminal (7) im zweiten Knopfbetriebsmodus daran gehindert wird, Funktionssteuerungsbenutzereingaben durch den Steuerknopf (32) zu empfangen, umfassend
- das Anzeigen eines Benutzermenüs (40) auf einer Anzeige (12) des Benutzersteuerterminals (7);
- das Empfangen einer Menüsteuerungsbenutzereingabe durch den Steuerknopf (32); und
- das Steuern einer Auswahl einer Menüoption im angezeigten Benutzermenü (40) gemäß der Menüsteuerungsbenutzereingabe.

2. Verfahren nach Anspruch 1, wobei das Ändern des Betriebs das Ändern einer Betriebsposition des Funktionselements (10a; 10b) von einer ersten Betriebsposition im ersten Knopfbetriebsmodus in eine zweite Betriebsposition im zweiten Knopfbetriebsmodus umfasst.

3. Verfahren nach Anspruch 2, wobei das Ändern der Betriebsposition das Ändern der Betriebsposition des Funktionselements (10a; 10b) von einer ersten Drehposition im ersten Knopfbetriebsmodus in eine zweite Drehposition im zweiten Knopfbetriebsmodus umfasst.

4. Verfahren nach mindestens einem der vorstehenden Ansprüche, wobei das Ändern der Betriebsposition das Ändern einer Lenkposition eines Steuerfunktionselements von einer ersten Lenkposition im ersten Knopfbetriebsmodus in eine zweite Lenkposition im zweiten Knopfbetriebsmodus umfasst.

5. Verfahren nach mindestens einem der vorstehenden Ansprüche, wobei das Ändern des Betriebs das Ändern einer Betriebsposition des Funktionsarbeitsgeräts (10a; 10b) von einer ersten Betriebsgeschwindigkeit im ersten Knopfbetriebsmodus in eine zweite Betriebsgeschwindigkeit im zweiten Knopfbetriebsmodus umfasst.

6. Verfahren nach mindestens einem der vorstehenden Ansprüche, wobei
- das Bereitstellen des Benutzersteuerterminals (7) das Bereitstellen des Steuerknopfs (32) mit einem drehbar am Benutzersteuerterminal (7) aufgenommenen Rad umfasst; und
- das Empfangen der Benutzereingabe das Ermitteln verschiedener Drehpositionen des Rads zum Empfangen der ersten und zweiten Funktionssteuerungsbenutzereingaben umfasst.

7. Verfahren nach mindestens einem der vorstehenden Ansprüche, wobei
- das Bereitstellen des Benutzersteuerterminals (7) das Bereitstellen des Steuerknopfs (32) mit einem graphischen Knopfelement an der Anzeige (12) des Benutzersteuerterminals (7) umfasst; und
- das Empfangen der Benutzereingaben das Erfassen von Anzeigebenutzereingaben zum Empfangen der ersten und zweiten Funktionssteuerungsbenutzereingaben umfasst, wobei die Anzeigebenutzereingabe mit dem graphischen Knopfelement im Eingriff steht.

8. Verfahren nach mindestens einem der vorstehenden Ansprüche, wobei das Erzeugen umfasst
- die ersten Funktionssteuersignale für das Funktionselement (10a; 10b), die einen ersten Wert eines Betriebsparameters angeben; und
- die zweiten Funktionssteuersignale für das Funktionselement (10a; 10b), die eine zweiten Wert eines Betriebsparameters angeben;
wobei eine Wertabweichung zwischen dem ersten und dem zweiten Wert des Betriebsparameters proportional zu einer Positionsabweichung zwischen einer ersten Drehposition und einer zweiten Drehposition des Steuerknopfs (32), die den ersten beziehungsweise den zweiten Funktionssteuerungsbenutzereingaben zugewiesen sind, ist.

9. Verfahren nach mindestens einem der vorstehenden Ansprüche, wobei das Erzeugen umfasst
- das Erzeugen mindestens eines der ersten und/oder der zweiten Funktionssteuersignale in einer zentralen Steuereinheit, die mit dem Benutzersteuerterminal (7) verbunden ist; und
- das Übertragen mindestens eines der ersten und/oder der zweiten Funktionssteuersignale von der zentralen Steuereinheit zu einer lokalen Steuereinheit am Arbeitsgerät (2) durch einen Datenbus, wobei die lokale Steuereinheit mit dem Funktionselement verbunden und dafür eingerichtet ist, den Betrieb des Funktionselements (10a; 10b) zu steuern.

10. Verfahren nach mindestens einem der vorstehenden Ansprüche, wobei das Verhindern des Benutzersteuerterminals (7) umfasst
- das Verhindern der Erzeugung der ersten und zweiten Funktionssteuersignale in der Steuereinheit; und/oder
- das Verhindern der Übertragung der ersten und zweiten Funktionssteuersignale von der zentralen Steuereinheit zur lokalen Steuereinheit.

11. Verfahren nach mindestens einem der vorstehenden Ansprüche, wobei das Betreiben des Funktionsarbeitsgeräts (10a; 10b) als Reaktion auf das Empfangen der ersten und zweiten Funktionssteuerungsbenutzereingaben das Echtzeitbetreiben des Funktionselements (10a; 10b) gemäß den ersten und zweiten Funktionssteuersignalen umfasst.

12. Verfahren nach mindestens einem der vorstehenden Ansprüche, wobei das Betreiben des Funktionselements (10a; 10b) das Betreiben eines Funktionsarbeitsgeräteelements aus der folgenden Gruppe umfasst: Rechenelement, Förderelement, Aufnahmeelement, Schneidelement, Einwickelelement, Hubelement, Lenkelement, Sprühelement, Aussaatelement und Kammerelement einer Ballenpresse.

13. Verfahren nach mindestens einem der vorstehenden Ansprüche, wobei das Bereitstellen des Benutzersteuerterminals (7) das Bereitstellen eines zentralen Benutzersteuerterminals an der Zugmaschine (1) umfasst, wobei des zentrale Benutzersteuerterminal dafür eingerichtet ist, Benutzereingaben zum Einstellen von Arbeitsgerätebetriebsmodi für das Arbeitsgerät (2) und Zugmaschinenbetriebsmodi für die Zugmaschine (1) zu empfangen.

14. Verfahren nach mindestens einem der vorstehenden Ansprüche, ferner umfassend, in mindestens einem des ersten Knopfbetriebsmodus und des zweiten Knopfbetriebsmodus, das Begrenzen der Drehung des Steuerknopfs (32) auf einen vorher definierten Drehungsgrad.

15. Landwirtschaftliche Maschine, umfassend
- eine Zugmaschine (1);
- ein Arbeitsgerät (2), das von der Zugmaschine (1) gezogen oder getragen wird;
- ein Benutzersteuerterminal (7) an der Zugmaschine (1); und
- einen Steuerknopf (32) bereitgestellt am Benutzersteuerterminal (7) zum Empfangen von Benutzereingaben durch den Steuerknopf (32);
wobei das Benutzersteuerterminal (7) aufweisend den Steuerknopf (32) dafür eingerichtet ist
- den Steuerknopf (32) in einem ersten Knopfbetriebsmodus zu betreiben, umfassend
- das Empfangen einer ersten Funktionssteuerungsbenutzereingabe durch den Steuerknopf (32);
- als Reaktion auf das Empfangen, das Erzeugen erster Funktionssteuersignale für ein Funktionselement (10a; 10b) des Arbeitsgeräts (2) in einer Steuereinheit (9), welche funktional mit dem Funktionselement (10a; 10b) verbunden ist;
- das Betreiben des Funktionselements (10a; 10b) gemäß den ersten Funktionssteuersignalen;
- das Empfangen einer zweiten Funktionssteuerungsbenutzereingabe durch den Steuerknopf (32);
- als Reaktion auf das Empfangen, das Erzeugen zweiter Funktionssteuersignale für das Funktionselement (10a; 10b) des Arbeitsgeräts (2) in der Steuereinheit (9); und
- das Ändern des Betriebs des Funktionselements (10a; 10b) zum Betreiben des Funktionselements (10a; 10b) gemäß den zweiten Funktionssteuersignalen;
**dadurch gekennzeichnet, dass** das Benutzersteuerterminal (7) ferner dafür eingerichtet ist, eine Anforderungsbenutzerreingabe zum Ändern des Knopfbetriebsmodus für den Steuerknopf (32) zu empfangen; und
- als Reaktion auf das Empfangen, den Steuerknopf (32) in einem zweiten Knopfbetriebsmodus zu betreiben, wobei das Benutzersteuerterminal (7) im zweiten Knopfbetriebsmodus daran gehindert wird, Funktionssteuerungsbenutzereingaben durch den Steuerknopf (32) zu empfangen, umfassend
- das Anzeigen eines Benutzermenüs (40) an einer Anzeige (12) des Benutzersteuerterminals (7);
- das Empfangen einer Menüsteuerungsbenutzereingabe durch den Steuerknopf (32); und
- das Steuern der Auswahl einer Menüoption im angezeigten Benutzermenü (40) gemäß der Menüsteuerungsbenutzereingabe.

## Revendications

1. Procédé pour contrôler le fonctionnement d'un terminal de commande d'utilisateur d'une machine agricole comprenant
- la fourniture d'une machine agricole ayant un tracteur (1) et un outil agricole (2) remorqué par le tracteur (1) ou véhiculé sur celui-ci ;
- la fourniture d'un terminal de commande d'utilisateur (7) sur le tracteur (1), le terminal de commande d'utilisateur (7) étant configuré pour recevoir une entrée d'utilisateur via un bouton de commande (32) ;
- l'actionnement du bouton de commande (32) dans un premier mode de fonctionnement de bouton, comprenant
- la réception d'une première entrée d'utilisateur de commande de fonction via le bouton de commande (32) ;
- en réponse à la réception, la génération de premiers signaux de commande de fonction pour un élément fonctionnel (10a ; 10b) de l'outil agricole (2) dans une unité de commande (9) connectée fonctionnellement à l'élément fonctionnel (10a ; 10b) ;
- l'actionnement de l'élément fonctionnel (10a; 10b) en fonction des premiers signaux de commande de fonction ;
- la réception d'une deuxième entrée d'utilisateur de commande de fonction via le bouton de commande (32) ;
- en réponse à la réception, la génération de deuxièmes signaux de commande de fonction pour l'élément fonctionnel (10a ; 10b) de l'outil agricole (2) dans l'unité de commande (9) ; et
- le changement de fonctionnement de l'élément fonctionnel (10a ; 10b) pour faire fonctionner l'élément fonctionnel (10a ; 10b) selon les deuxièmes signaux de commande de fonction ;
**caractérisé par**
- la réception d'une entrée d'utilisateur de requête pour changer un mode de fonctionnement de bouton du bouton de commande (32) ; et
- en réponse à la réception, actionner le bouton de commande (32) dans un deuxième mode de fonctionnement de bouton, le terminal de commande d'utilisateur (7) étant empêché de recevoir une entrée d'utilisateur de commande de fonction via le bouton de commande (32) dans le deuxième mode de fonctionnement de bouton, comprenant
- l'affichage d'un menu utilisateur (40) sur un écran (12) du terminal de commande d'utilisateur (7) ;
- la réception d'une entrée d'utilisateur de commande de menu via le bouton de commande (32) ; et
- la commande de la sélection d'un élément de menu dans le menu utilisateur (40) affiché selon l'entrée d'utilisateur de commande de menu.

2. Procédé selon la revendication 1, dans lequel l'opération de changement comprend le changement d'une position de fonctionnement de l'élément fonctionnel (10a ; 10b) d'une première position de fonctionnement dans le premier mode de fonctionnement de bouton à une deuxième position de fonctionnement dans le deuxième mode de fonctionnement de bouton.

3. Procédé selon la revendication 2, dans lequel le changement de la position de fonctionnement comprend le changement de la position de fonctionnement de l'élément fonctionnel (10a ; 10b) d'une première position rotationnelle dans le premier mode de fonctionnement à une deuxième position rotationnelle dans le deuxième mode de fonctionnement.

4. Procédé selon l'une au moins des revendications précédentes, dans lequel le changement de la position de fonctionnement comprend le changement d'une position de direction d'un élément de direction fonctionnel d'une première position de direction dans le premier mode de fonctionnement de bouton à une deuxième position de direction dans le deuxième mode de fonctionnement de bouton.

5. Procédé selon l'une au moins des revendications précédentes, dans lequel l'opération de changement comprend le changement d'une position de fonctionnement de l'outil fonctionnel (10a ; 10b) d'une première vitesse de fonctionnement dans le premier mode de fonctionnement de bouton à une deuxième vitesse de fonctionnement dans le deuxième mode de fonctionnement de bouton.

6. Procédé selon l'une au moins des revendications précédentes, dans lequel
- la fourniture du terminal de commande d'utilisateur (7) comprend la fourniture du bouton de commande (32) avec une roue rotative reçue sur le terminal de commande d'utilisateur (7) ; et
- la réception de l'entrée d'utilisateur comprend la détermination de différentes positions de rotation de la roue pour recevoir la première et la deuxième entrée d'utilisateur de commande de fonction.

7. Procédé selon l'une au moins des revendications précédentes, dans lequel
- la fourniture du terminal de commande d'utilisateur (7) comprend la fourniture du bouton de commande (32) avec un élément de bouton graphique sur l'écran (12) du terminal de commande d'utilisateur (7) ; et
- la réception de l'entrée d'utilisateur comprend la détection d'une entrée d'utilisateur d'écran pour recevoir les première et deuxième entrées d'utilisateur de commande de fonction, l'entrée d'utilisateur d'écran coopérant avec l'élément de bouton graphique.

8. Procédé selon l'une au moins des revendications précédentes, dans lequel la génération comprend
- les premiers signaux de commande de fonction pour l'élément fonctionnel (10a ; 10b) indiquant une première valeur d'un paramètre de fonctionnement ; et
- les deuxièmes signaux de commande de fonction pour l'élément fonctionnel (10a ; 10b) indiquant une deuxième valeur d'un paramètre de fonctionnement ;
dans lequel une différence de valeur entre les première et deuxième valeurs du paramètre de fonctionnement est proportionnelle à une différence de position entre une première position de rotation et une deuxième position de rotation du bouton de commande (32) respectivement associées aux première et deuxièmes entrées d'utilisateur de commande de fonction.

9. Procédé selon l'une au moins des revendications précédentes, dans lequel la génération comprend
- la génération d'au moins les uns parmi les premiers et deuxièmes signaux de commande de fonction dans une unité de commande centrale connectée au terminal de commande d'utilisateur (7) ; et
- la transmission d'au moins les uns parmi les premiers et deuxièmes signaux de commande de fonction de l'unité de commande centrale à une unité de commande locale sur l'outil agricole (2) via un bus de données, l'unité de commande locale étant connectée à l'élément fonctionnel et configurée pour commander le fonctionnement de l'élément fonctionnel (10a ; 10b).

10. Procédé selon l'une au moins des revendications précédentes, dans lequel l'empêchement du terminal de commande d'utilisateur (7) comprend au moins l'un parmi
- l'empêchement de la génération des premiers et deuxièmes signaux de commande de fonction dans l'unité de commande ; et
- l'empêchement de la transmission des premiers et deuxièmes signaux de commande de fonction de l'unité de commande centrale à l'unité de commande locale.

11. Procédé selon l'une au moins des revendications précédentes, dans lequel l'actionnement de l'outil fonctionnel (10a ; 10b) comprend, en réponse à la réception des première et deuxième entrées d'utilisateur de commande de fonction, l'actionnement en temps réel de l'élément fonctionnel (10a ; 10b) en fonction des premiers et deuxièmes signaux de commande de fonction.

12. Procédé selon l'une au moins des revendications précédentes, dans lequel l'actionnement de l'élément fonctionnel (10a ; 10b) comprend l'actionnement d'un élément d'outil fonctionnel du groupe suivant : un élément de râteau, un élément de transport, un élément ramasseur, un élément de coupe, un élément d'emballage, un élément de levage, un élément de brassage, un élément de pulvérisation, un élément d'ensemencement, et un élément de chambre d'une presse à balles.

13. Procédé selon l'une au moins des revendications précédentes, dans lequel la fourniture du terminal de commande d'utilisateur (7) comprend la fourniture d'un terminal de commande d'utilisateur central sur le tracteur (1), le terminal de commande d'utilisateur central étant configuré pour recevoir une entrée d'utilisateur pour régler des modes de fonctionnement d'outil pour l'outil agricole (2) et des modes de fonctionnement de tracteur pour le tracteur (1).

14. Procédé selon l'une au moins des revendications précédentes, comprenant en outre, dans au moins l'un parmi le premier mode de fonctionnement de bouton et le deuxième mode de fonctionnement de bouton, la limitation d'une rotation du bouton de commande (32) à un degré de rotation prédéfini.

15. Machine agricole comprenant :
- un tracteur (1) ;
- un outil agricole (2) remorqué par le tracteur (1) ou véhiculé sur celui-ci ;
- un terminal de commande d'utilisateur (7) sur le tracteur (1) ; et
- un bouton de commande (32) fourni sur le terminal de commande d'utilisateur (7) pour recevoir une entrée d'utilisateur via le bouton de commande (32) ;
dans lequel le terminal de commande d'utilisateur (7) ayant le bouton de commande (32) est configuré pour
- actionner le bouton de commande (32) dans un premier mode de fonctionnement de bouton comprenant
- la réception d'une première entrée d'utilisateur de commande de fonction via le bouton de commande (32) ;
- en réponse à la réception, la génération de premiers signaux de commande de fonction pour un élément fonctionnel (10a ; 10b) de l'outil agricole (2) dans une unité de commande (9) connectée fonctionnellement à l'élément fonctionnel (10a ; 10b);
- l'actionnement de l'élément fonctionnel (10a ; 10b) en fonction des premiers signaux de commande de fonction ;
- la réception d'une deuxième entrée d'utilisateur de commande de fonction via le bouton de commande (32) ;
- en réponse à la réception, la génération de deuxièmes signaux de commande de fonction pour l'élément fonctionnel (10a ; 10b) de l'outil agricole (2) dans l'unité de commande (9) ; et
- le changement de fonctionnement de l'élément fonctionnel (10a ; 10b) pour faire fonctionner l'élément fonctionnel (10a ; 10b) en fonction des deuxième signaux de commande de fonction ;
**caractérisé en ce que** le terminal de commande d'utilisateur (7) est en outre configuré pour recevoir une entrée d'utilisateur de requête pour changer le mode de fonctionnement de bouton pour le bouton de commande (32) ; et
- en réponse à la réception, l'actionnement du bouton de commande (32) dans un deuxième mode de fonctionnement de bouton, le terminal de commande d'utilisateur (7) étant empêché de recevoir une entrée d'utilisateur de commande de fonction via le bouton de commande (32) dans le deuxième mode de fonctionnement de bouton, comprenant
- l'affichage d'un menu utilisateur (40) sur un écran (12) du terminal de commande d'utilisateur (7) ;
- la réception d'une entrée d'utilisateur de commande de menu via le bouton de commande (32) ; et
- le contrôle de la sélection d'un élément de menu dans le menu utilisateur (40) affiché en fonction de l'entrée d'utilisateur de commande de menu.
